# EUROPEAN PATENT APPLICATION

(11) **EP 1 857 162 A1**
(43) Date of publication of application: **21.11.2007**
(21) Application number: 07107795.2
(22) Date of filing: 09.05.2007
(51) Int. Cl.: B01D 29/11

(54) **System for static filtration of liquids**

(30) Priority: 17.05.2006 IT PR20060044
(71) Applicant: Allegri Geom. Primo S.r.l., 43100 Parma (IT)
(72) Inventor: Allegri, Primo, 43100, Parma (IT)
(74) Representative: Guareschi, Antonella

(57) **Abstract**

A system (1) for static filtration of liquids, having a tank (10) with at least one closed circular structure (20) therein, whose bottom is closed by a base (20a), the base (20a) being supported in a raised position with respect to the base (10a) of the tank (10); said structure (20) containing a series of concentric circular filter panels, each having two walls formed of filter cloths in spaced relationship to form filtering chambers (3) and (4) through which the filtered fluid flows out and chambers (5, 6, 7) for introduction of the liquid to be filtered.

## Description

This invention relates to a system for static filtration of liquids.

Various static filtration systems are known in the art, which include quadrangular or cylindrical tanks with a hopper-like bottom on which the sludge generated by the filtering process is collected.

The provision of a hopper for the sludge separated from the filtered liquids allows removal of the collected sludge by mechanical or pump means, however the provision of such hopper may be undesired especially in view of the masonry works required for accommodating it in an adequate area.

Special masonry works are required for forming a pit large enough to contain the hopper, or support structures have to be provided to hold the system so formed in a raised position.

This invention has the object of avoiding such preparatory masonry works, by providing a static filtration system having a flat bottom and a sludge suction system as disclosed and claimed below.

In addition to the provision of a flat-bottom tank that requires no additional work, a major advantage of this solution is that the extractor means are mounted on the fifth wheel that carries the manifolds for countercurrent washing of the panels, but have two independent motor drives, to afford independent operating times for the two systems.

These objects and advantages are achieved by the static filtration system of this invention, which is characterized by the annexed claims.

These and other features will be more apparent from the following description of a few embodiments, which are shown by way of example and without limitation in the accompanying drawings, in which:
- Figure 1 is a top view of a static filtration system of this invention,
- Figure 2 is an A-A section of the system of Figure 1.

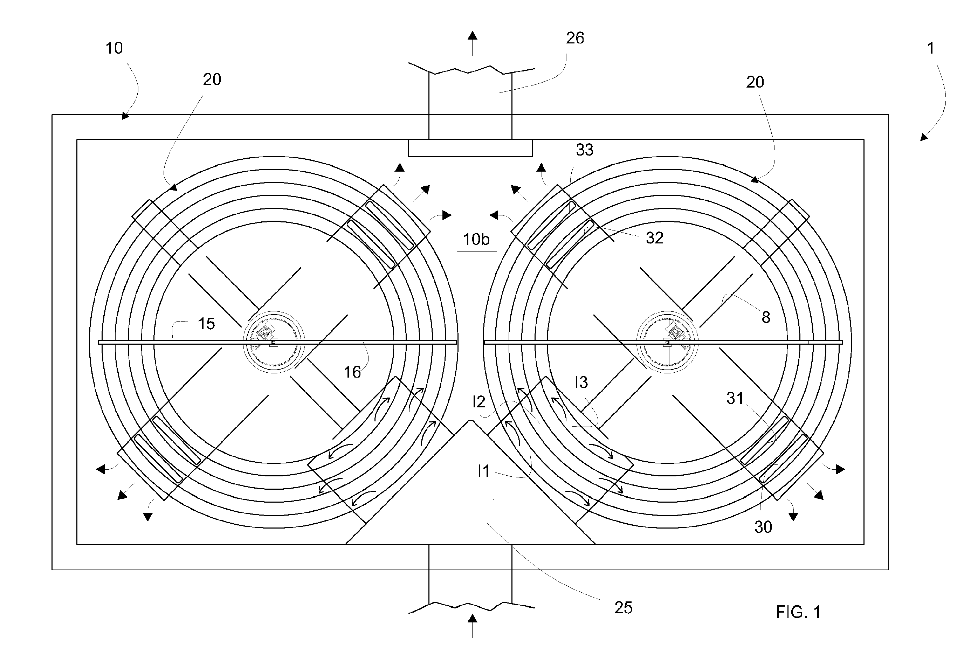

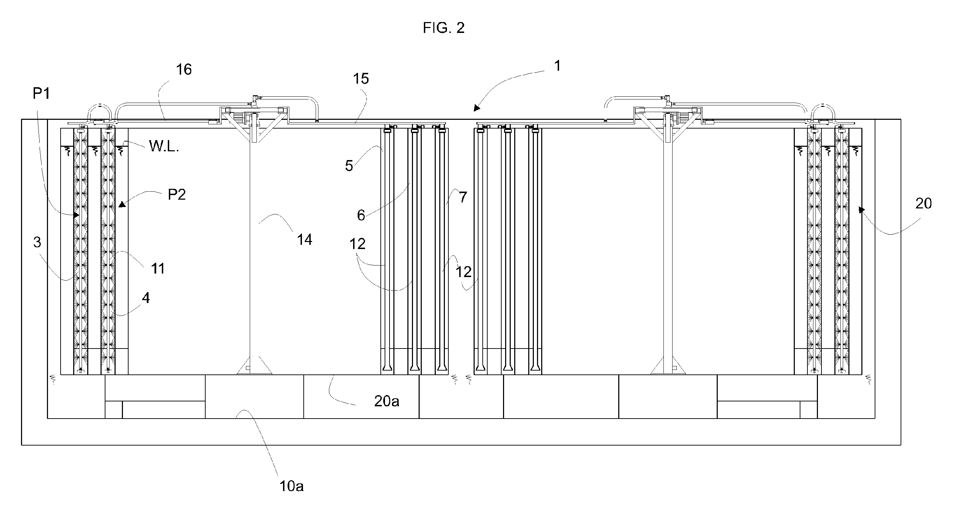

Referring to Figures 1 and 2, numeral 1 designates a static filtration system of the type comprising a tank 10, which has a quadrangular shape in the drawing, although it may be, for example, of circular shape, whose bottom is closed by a substantially flat base 10a.

Two circular structures 20 also having their bottom closed by a base 20a, are provided in the tank 10, said structures 20 being of smaller size.

The base 20a of each structure 20 is held by a support 8 in a raised position relative to the flat base 10a of the tank 10.

The structure 20 in turn contains a series of concentric filter panels, two in this case, indicated with P1 and P2, each having two walls formed of filter cloths, in spaced relationship to form chambers 3 and 4 through which the filtered fluid flows out.

The panels and corresponding filter cloths are arranged in such positions as to form three concentric chambers 5, 6, 7, where the liquid to be filtered is designed to be introduced, as better explained below, with the filtering chambers 3 and 4 intervening therebetween.

The liquid to be filtered is introduced from the bottom 20a of the structure 20, namely through three inlets I1, I2, I3 corresponding to the three chambers 5, 6 and 7, to the level designated as W.L. in the drawing.

Still from the bottom 20a, through a series of slots 30, 31, 32 and 33 corresponding to the chambers 3 and 4 the liquid is caused to flow out into the space 10b of the tank 10, wherefrom it overflows to the outlet 26.

A flow divider and a foam trapping device may be provided at the liquid inlet.

A post 14 is installed at the center of each structure 20 and has a fifth wheel at its top with a motor drive unit for rotating it about the axis of the post 14.

The fifth wheel in turn supports two arms 15 and 16, preferably but without limitation at 180° from each other.

The arm 15 supports two vertical washing columns 11 which fit into the corresponding filtered water chambers 3 and 4, preferably to the bottom thereof; said columns 11 having a plurality of nozzles, which are arranged on opposed rows for simultaneous operation on the two filtering walls.

The columns 11 receive clean or filtered water from a supply through an adjustable pipe with a control valve fitted thereon.

Washing columns may be provided in varying numbers in each chamber, whereby the support arms may be accordingly increased.

On the other hand, the arm 16 supports three sludge extractor means 12 for removal of the sludge precipitated after countercurrent washing, said means being fitted in the chambers 5, 6 and 7 of the liquid to be purified.

Each extractor means extends approximately to the bottom 20a of the structure to reach the settled sludge which has been removed from the filter cloths during countercurrent washing.

The extractor means are mounted on the fifth wheel that carries the manifolds for countercurrent washing of the panels, but the two systems have independent motor drives, to afford independent or synchronized operating times thereof.

At regular intervals, or as required, the motor drive of the fifth wheel will be operated to start the above mentioned countercurrent washing operation.

Sludge suction may occur at the same time as sludge is removed from the cloths or at a later time, to provide larger extraction amounts and energy savings.

The above washing and sludge extraction operations do not require the filtering process to be stopped.

Each panel may be formed of one piece or be composed of shorter modules, to be combined together to form a single closed-section panel.

The washing system may also operate in a mixed air/water configuration, if needed, such system being essentially identical to the water washing system having vertical chambers to be fitted in the filtered liquid chambers and movable therein.

Air washing may be used in combination with or instead of water washing.

While reference has been made herein to a tank having two circular tanks 20 therein, such configuration hall be obviously intended without limitation to the inventive scope wherefore, as needed, one structure or more than two structures 20 may be provided in the tank 10, depending on the size of the latter.

Also, the slots 32 and 33 may be closed to enhance circulation of filtered water to the outlet 26.

## Claims

1. A system (1) for static filtration of liquids, **characterized in that** it comprises a tank (10) with at least one closed circular structure (20) therein, whose bottom is closed by a base (20a), the base (20a) being supported in a raised position with respect to the base (10a) of the tank (10); said structure (20) containing a series of concentric circular filter panels, each having two walls formed of filter cloths in spaced relationship to form filtering chambers (3) and (4) through which the filtered fluid flows out and chambers (5, 6, 7) for introduction of the liquid to be filtered.

2. A system as claimed in claim 1, **characterized in that** the bottom (20a) of the structure (20) comprises:
a. inlets (I1, I2, I3) at the chambers (5, 6 and 7) where the liquid to be filtered is introduced
b. a series of slots (30, 31, 32 and 33) at the filtering chambers (3 and 4) for causing the filtered liquid to flow out into the space (10b) of the tank (10).

3. A system as claimed in claim 2, **characterized in that** the filtered liquid flows out of the tank (10) over a weir and through an outlet (26).

4. A system as claimed in claim 1, **characterized in that** a post (14) is installed at the center of each structure (20) and has a fifth wheel at its top with a motor drive unit for rotating it about the axis of the post (14), said fifth wheel supporting two arms (15 and 16) which in turn:
a. the arm (15) supports vertical washing columns (11) which fit into the corresponding filtered water chambers (3 and 4); said columns (11) having a plurality of nozzles, which are arranged on opposed rows for simultaneous operation on the two corresponding filtering walls,
b. the arm (16) supports sludge extractor means (12) for removal of the sludge precipitated after countercurrent washing, said means being fitted in the corresponding chambers (5, 6 and 7) of the liquid to be purified.

5. A system as claimed in claim 4, **characterized in that** each extractor means (12) extends to the bottom (20a) of the structure to reach the settled sludge which has been removed from the filter cloths during countercurrent washing.

6. A system as claimed in claim 1, **characterized in that** the columns (11) receive clean or filtered water from a supply through an adjustable pipe with a control valve fitted thereon.

7. A system as claimed in claim 1, **characterized in that** washing columns may be provided in varying numbers in each chamber, whereby the support arms may be accordingly increased.

8. A system as claimed in claim 4, **characterized in that** the extractor means (12) and the manifolds (11) for countercurrent washing of the panels have independent motor drives for independent or synchronized operation times thereof.

9. A system as claimed in claim 4, **characterized in that** sludge suction may occur at the same time as sludge is removed from the cloths or at a later time, to provide larger extraction amounts and energy savings.

10. A system as claimed in claim 1, **characterized in that** said tank has a quadrangular or circular shape.

11. A system as claimed in claim 1, **characterized in that** said panels have a circular section and each panel may be formed of one piece or be composed of shorter modules, to be combined together to form a single closed-section panel.
